Europäisches Patentamt

**(19)** European Patent Office

Office européen des brevets

**(11)** **EP 1 204 601 B1**

## (12) EUROPÄISCHE PATENTSCHRIFT

(45) Veröffentlichungstag und Bekanntmachung des Hinweises auf die Patenterteilung:
**19.02.2003 Patentblatt 2003/08**

(21) Anmeldenummer: **00944040.5**

(22) Anmeldetag: **15.07.2000**

(51) Int Cl.7: **C01G 45/00**, H01M 4/02, H01M 4/50

(86) Internationale Anmeldenummer:
**PCT/EP00/06768**

(87) Internationale Veröffentlichungsnummer:
**WO 01/007368 (01.02.2001 Gazette 2001/05)**

(54) **LITHIUMOXID ENTHALTENDE LITHIUMINTERKALATIONSVERBINDUNGEN**

LITHIUM OXIDE CONTAINING LITHIUM INTERCALATION COMPOUNDS

COMPOSES D'INTERCALATION DE LITHIUM CONTENANT DE L'OXYDE DE LITHIUM

(84) Benannte Vertragsstaaten:
**AT BE CH CY DE DK ES FI FR GB GR IE IT LI LU MC NL PT SE**

(30) Priorität: **27.07.1999 DE 19935090**

(43) Veröffentlichungstag der Anmeldung:
**15.05.2002 Patentblatt 2002/20**

(73) Patentinhaber: **EMTEC Magnetics GmbH**
**67059 Ludwigshafen (DE)**

(72) Erfinder:
• **HEIL, Günter**
**D-67071 Ludwigshafen (DE)**
• **KORMANN, Claudius**
**D-67105 Schifferstadt (DE)**

• **ADEL, Jörg**
**D-67071 Ludwigshafen (DE)**

(56) Entgegenhaltungen:
**EP-A- 0 633 619**     **EP-A- 0 814 524**
**DE-A- 19 813 185**

• **PATENT ABSTRACTS OF JAPAN vol. 1999, no. 08, 30. Juni 1999 (1999-06-30) & JP 11 071115 A (TOSOH CORP), 16. März 1999 (1999-03-16)**
• **PATENT ABSTRACTS OF JAPAN vol. 1997, no. 01, 31. Januar 1997 (1997-01-31) & JP 08 227709 A (SANYO ELECTRIC CO LTD), 3. September 1996 (1996-09-03)**
• **PATENT ABSTRACTS OF JAPAN vol. 1998, no. 13, 30. November 1998 (1998-11-30) & JP 10 203826 A (TOSOH CORP), 4. August 1998 (1998-08-04)**

**Beschreibung**

Die Erfindung betrifft verbesserte, Lithiumoxid enthaltende Lithiuminterkalationsverbindungen für Dünnfilmelektroden, ein Verfahren zu deren Herstellung, daraus hergestellte Elektroden sowie sekundäre Lithiumionenbatterien mit Lithiumoxid enthaltenden Lithiuminterkalationsverbindungen als aktives Material der positiven Elektrode.

Lithiumbatterien können aus einer oder mehreren elektrochemischen Zellen, die elektrochemisch aktive Pigmente enthalten, hergestellt werden. Solche Zellen bestehen typischerweise aus einer Anode (negative Elektrode), einem Separator, einer Kathode (positve Elektrode) und einem Elektrolyt. Batterien mit metallischem Lithium als Anode sind ebenso bekannt wie solche mit Graphit, Koks oder anderen Kohlenstoffpartikeln, die bekanntlich Alkalimetallionen interkalieren können. Weiterhin sind auch Batterien mit anderen Lithiuminterkalationsverbindungen, also Stoffen, die Lithium unter Einwirkung eines elektrischen Potentials ein- und auslagern können, bekannt. Der Elektrolyt besteht typischerweise aus einem Lithiumsalz, welches in einem oder mehreren aprotischen, normalerweise organischen Lösungsmitteln gelöst ist. Als weitere Elektrolyte kommen Festelektrolyte in Betracht, welche aus einer polymeren Matrix, die ein ionisch leitfähiges, aber elektronisch isolierendes Medium enthält, bestehen. Der Ladungsvorgang wird im allgemeinen so definiert, daß beim Laden die Anode (der Minuspol) Lithiumionen aufnimmt, während die Kathode (der Pluspol) als Quelle für Lithiumionen dient. Zellen mit Lithiummetall als Anode sind üblicherweise beim Zusammenbau geladen.

Zellen mit Graphit oder anderen Kohlenstoff enthaltenden Anoden oder einer anderen zur Aufnahme von Lithiumionen fähigen Wirtssubstanz sind beim Zusammenbau üblicherweise ungeladen. Damit sie als Energiespeicher verwendet werden können, müssen sie gegen eine Lithiumionen enthaltende Interkalationsverbindung, vorzugsweise eine Lithiumoxid enthaltende Interkalationsverbindung, geschaltet und geladen werden. Beim Laden wandern die Lithiumionen von der Interkalationsverbindung zum Graphit oder Kohlenstoff oder einer anderen zur Aufnahme von Lithiumionen fähigen Wirtssubstanz. Danach kann die Zelle wieder entladen werden, wobei das Lithium zurückbewegt wird. Solche wiederaufladbaren Batterien, welche kein metallisches Lithium enthalten, nennt man Lithiumionenbatterien. Beispiele hierfür sind in den US 4 464 447 und US 5 418 090 beschrieben.

In den Kathoden werden bevorzugt $LiCoO_2$, $LiMn_2O_4$ und $LiNiO_2$ als oxidische Materialien eingesetzt. All diese Verbindungen werden auch mit variierten Mengenverhältnissen der Metallionen eingesetzt, um bestimmte Vorteile bei der Ladung oder der Lebensdauer einzustellen. Gelegentlich wird der Sauerstoff ganz oder teilweise durch andere Elemente, z.B. Fluor oder Schwefel ersetzt. Während die Kobaltverbindungen teuer sind, sind die Nickelverbindungen schwierig herzustellen. Demgegenüber sind Manganverbindungen relativ preisgünstig.

Die spezifische Ladung von $LiMn_2O_4$ beträgt theoretisch 148 Milliamperestunden pro Gramm. Durch Variation des Sauerstoffgehalts oder des Verhältnisses von Lithium zu Mangan kann dieser Wert verändert werden. Nach Meinung vieler Fachleute kann jedoch $LiMn_2O_4$ nur etwa 110 - 120 Milliamperestunden pro Gramm, entsprechend etwa 0,8 mol Lithium pro Formeleinheit, dauerhaft reversibel zyklisieren. Beim $LiNiO_2$ und $LiCoO_2$ können nur etwa 0,5 mol Lithium pro Formeleinheit reversibel zyklisiert werden. Günstiger sieht die Situation bei gemischten Nickeloxiden aus, bei denen ein Teil des Nickels durch Cobalt oder ein anderes Metall, Metalloid oder Übergangsmetall ersetzt ist. Beispielhaft erwähnt sei $Li_1Ni_{0,85}Co_{0,15}O_2$. Die Verwendung der ganzzahligen Koeffizienten 1 für Lithium oder 2 für Sauerstoff dient nur der Vereinfachung der Formelbeschreibung; in der Praxis werden durch beabsichtigte oder unbeabsichtigte Variation der Einsatzstoffmengen auch gebrochene Werte verwendet. Die Erfahrung lehrt, daß die Elemente in weiten, nicht nur geradzahligen Mengenverhältnissen variiert werden können und dadurch für den Einsatz in Kathoden brauchbare Interkalationsverbindungen erhalten werden. Wesentlich ist, daß die Verbindungen Lithiumionen und genügend zum elektrischen Ladungswechsel fähige Elemente enthalten.

Inzwischen sind viele Verfahren zur Herstellung von Interkalationsverbindungen zur Verwendung in Kathoden beschrieben worden. So wurde die Herstellung von $LiNiO_2$ durch Hochtemperatursynthese bereits in J. Amer. Chem. Soc. 76, 1499 (1954) beschrieben. In der US 4 302 518 wird die Synthese von $Li_xCo_yO_2$ durch Temperung einer Mischung von Lithiumcarbonat und Cobaltcarbonat bei 900 °C in Luft, gefolgt von 2 weiteren Bränden, dargestellt. Dort wird ebenso die Synthese von $Li_xNi_yO$ durch Temperung von $LiOH \times H_2O$ und Nickelpulver unter Sauerstoff bei 750 °C mit nachfolgenden Mahlungen und weiteren Bränden beschrieben. Die US 4 507 371 lehrt, daß die Synthese von Lithiuminterkalationsverbindungen mit dem kubischen Ionengitter $(B_2)X_4{}^{n-}$ durch unterschiedliche Reaktionen gelingt: Festkörperreaktionen aus den pulverförmigen Elementen oder ihren Verbindungen bei hohen Temperaturen, Ionenaustauschmethoden oder chemische oder elektrochemische Titrationstechniken. In der US 4 980 080 ist ein Verfahren zur Herstellung von $LiNi_{1-x}Co_xO_2$ beschrieben, welches die folgenden Schritte umfaßt: 1) Herstellung einer Mischung von Pulvern, 2) Erhitzen der Mischung in Luft bei 600 - 800 °C 3) optional: Homogenisieren der Brennware und Wiederholung des Pulverbrandes.

Ein naßchemisches Verfahren zur Herstellung eines Lithiummanganoxid-Spinells ist in der DE 19 515 629 beschrieben. Hier wird eine Lithiumverbindung und ein Mangansalz in disperser Phase umgesetzt und getrocknet, worauf der Trockenrückstand einer Abfolge von Mahlungen und Temperungen unterworfen wird. Ein weiteres naßchemisches Syntheseverfahren ist in der US 5 742 070 beschrieben. Es beruht im wesentlichen auf der Herstellung von Lösungen von Lithium, Übergangsmetall und organischen Säuren und Alkoholen, welche anschließend getrocknet, gemahlen und gebrannt werden.

Die PCT-Anmeldung WO 97/37935 beansprucht ein trockenes Herstellverfahren, wobei Mischungen von Manganoxiden und Lithiumverbindungen mit jeweils kontrollierter Partikelgrößenverteilung bei ausgewählten Temperaturen mehrfach gebrannt werden. In der PCT-Anmeldung WO 98/02931 wird ein Verfahren zur Herstellung von Lithiummanganinterkalationsoxiden beschrieben, welches aus der Reaktion von LiOH, $MnO_2$ und mindestens einem polyfunktionellen Alkohol besteht, der eine Temperaturbehandlung folgt.

Während die bekannten Herstellverfahren zu gewissen Verbesserungen der Eigenschaften von Lithiuminterkalationsoxiden führten, so befriedigen sie doch nicht die hohen Anforderungen, die die Anwendung solcher Substanzen in Elektroden, insbesondere Kathoden von Lithiumionenbatterien stellen. Insbesondere ist es bisher nicht gelungen, Lithiuminterkalationsverbindungen herzustellen, welche bei ihrer Anwendung sowohl hohe spezifische Ladungen aufweisen als auch eine hohe Belastbarkeit der damit erzeugten Batterien erzielen. Ein weiterer Nachteil des Standes der Technik liegt darin, daß viele hochspezialisierte Verfahren zur Herstellung von Lithiuminterkalationsverbindungen existieren, die Variationen in der Zusammensetzung und gleichzeitig in der Morphologie sowie der Kristallstruktur der erzeugten Verbindungen nicht zulassen.

Der vorliegenden Erfindung lag daher die Aufgabe zugrunde, Lithiuminterkalationsverbindungen mit hoher spezifischer Ladung bereitzustellen, welche je nach Verwendungszweck eine hohe Leistungsdichte oder eine hohe Energiedichte in damit hergestellten Batterien liefern können und eine hohe Belastbarkeit dieser Batterien gewährleisten. Eine weitere Aufgabe bestand darin, ein einfaches Verfahren zur Herstellung solcher Lithiuminterkalationsverbindungen zur Verfügung zu stellen, mit dem eine gezielte Beeinflussung hinsichtlich einer hohen Leistungsdichte oder hohen Energiedichte der daraus gefertigten Batterien möglich ist und welches auf eine unterschiedliche elementare Zusammensetzung der Lithiuminterkalationsverbindungen und auf verschiedene Morphologien anwendbar ist. Außerdem bestand eine Aufgabe darin, Elektroden bereitzustellen, die beim Einsatz in Batterien eine hohe Belastbarkeit, hohe spezifische Ladung sowie hohe Leistungsdichte oder hohe Energiedichte dieser Batterien erzielen. Eine zusätzliche Aufgabe bestand darin, sekundäre Lithiumionenbatterien bereitzustellen, die über eine hohe Belastbarkeit, hohe Energieabgabe und/oder hohe Leistung verfügen und preisgünstig für verschiedene Kristallstrukturen herstellbar sind.

Es wurde überraschend gefunden, daß die spezifische Ladung von Lithiuminterkalationsverbindungen hoch ist und die Belastbarkeit von daraus hergestellten Batterien verbessert werden kann, wenn Lithiumoxid enthaltende Lithiumintekalationsverbindungen mit besonderer Morphologie, nämlich in Form von Agglomeraten eingesetzt werden, wobei die Agglomerate eine gemäß der BET-Methode bestimmte spezifische Oberfläche von 0,1 bis 3 $m^2/g$, eine am $d_{50}$-Wert bestimmte Agglomeratgröße von größer als 6 µm, einen am $d_{90}$-Wert bestimmten Durchmesser von 100 µm oder kleiner und Intraporen mit einer Größe von 0,3 µm bis $d_{50}/4$ besitzen, sowie ein Intraporenvolumen von mindestens 0,08 ml/g aufweisen.

Dabei soll unter dem Begriff Morphologie das Zusammenwirken der Partikeleigenschaften Porosität ( Porenvolumen), Teilchen- oder Agglomeratgröße ( Durchmesser) und spezifische Oberfläche verstanden werden. Als Agglomerate werden Gebilde bezeichnet, die aus mehreren kleinen, mit einer gewissen Festigkeit verbundenen Teilchen zusammengesetzt sind und bei denen ein Durchmesser, eine spezifische Oberfläche und Poren feststellbar sind.

Des weiteren wurde gefunden, daß sich derartige Lithiuminterkalationsverbindungen mit einem Verfahren herstellen lassen, welches umfaßt:

a) Herstellen eines innigen Gemisches aus einer oder mehreren Lithiumverbindungen und einer oder mehreren Übergangsmetallverbindungen und darauffolgendes Tempern und Mahlen, wobei eine feinteilige Mischung erhalten wird;

b) Suspendieren des feinteiligen Gemisches in Wasser unter Zusatz eines mindestens teilweise wasserlöslichen polymeren Bindemittels und nachfolgendes Sprühtrocknen, wobei Agglomerate erhalten werden; und

c) Tempern der trockenen Agglomerate in oxidierender Atmosphäre bei 450 °C bis 900 °C.

Auch wurde gefunden, daß Dünnfilmelektroden, welche nach dem erfindungsgemäßen Verfahren hergestellte Lithiuminterkalationsverbindungen mit der erfindungsgemäßen Morphologie enthalten, in Batterien eine hohe spezifische Ladung, eine hohe Belastbarkeit und je nach gewünschtem Einsatzzweck eine hohe Leistungsdichte oder eine hohe Energiedichte erzielen.

Solche Dünnfilmelektroden werden nach dem folgenden, an sich bekannten, allgemeinen Verfahren hergestellt:

In einem mit der erfindungsgemäßen Lithiuminterkalationsverbindung, Graphit und Leitruß gefüllten Gefäß werden die Pigmente gut vermischt. Anschließend wird dem Pigmentgemisch eine Lösung aus einem allgemein gebräuchlichen Elektrodenbindemittel und einem Lösungsmittel oder Lösungsmittelgemisch in geeigneter Menge zugegeben und innig mit den Pigmenten vermischt. Die so erhaltene Suspension wird auf eine dünne Aluminiumfolie aufgerakelt oder -gegossen. Anschließend wird das Lösungsmittel bei erhöhter Temperatur entfernt. Die beschichtete Folie wird zwischen Stahlwalzen verpreßt und im Vakuum wasserfrei getrocknet. Die so hergestellten beschichteten Formkörper sind als Dünnfilmelektroden zur Herstellung von sekundären Lithiumionenbatterien einsetzbar.

Es wurde weiterhin gefunden, daß sekundäre Lithiumionenbatterien, welche die erfindungsgemäßen Lithiuminterkalationsverbindungen als aktives Material der positiven Elektrode enthalten, eine hohe Belastbarkeit bei gleichzeitig hoher Energiefreisetzung oder hoher Leistung aufweisen und gleichzeitig kostengünstig herstellbar sind.

Solche sekundären Lithiumionenbatterien werden in an sich bekannter Weise hergestellt und bestehen im wesentlichen aus einer positiven Elektrode, einer negativen Elektrode, einem Separator und einem Elekrolyten in einem Gehäuse. Für die erfindungsgemäßen sekundären Lithiumionenbatterien werden die erfindungsgemäßen Lithiuminterkalationsverbindungen als aktives Material mit einem geeigneten, an sich bekannten Bindemittel in der positiven Elektrode verwendet, während als aktives Material für die negative Elektrode Graphit oder Kohlenstoff oder eine andere zur Aufnahme von Lithiumionen fähige Wirtssubstanz mit einem geeigneten, an sich bekannten Bindemittel eingesetzt wird.

Die erfindungsgemäßen Lithiuminterkalationsverbindungen zeichnen sich durch besonders gute Verarbeitungs- und elektrische Eigenschaften aus und gestatten die Verbindung von normalerweise widersprüchlichen Eigenschaften, zum Beispiel die Kombination einer hohen spezifischen Oberfläche mit einem gleichzeitig hohen $d_{50}$-Wert.

Die gemäß der BET-Methode bestimmte spezifische Oberfläche der erfindungsgemäßen Lithiuminterkalationsverbindungen liegt im Bereich von 0,1-3 $m^2$/g, bevorzugt von 0,3-1,5 $m^2$/g und ganz bevorzugt von 0,5-1,2 $m^2$/g. Die Agglomerat- oder Teilchengröße, gemessen am $d_{50}$-Wert, ist größer als 6 $\mu$m, bevorzugt größer als 10 $\mu$m. Der Durchmesser der Agglomerate, gemessen am $d_{90}$-Wert, ist zweckmäßigerweise nicht größer als $d_{90}$ = 100 $\mu$m, bevorzugt kleiner als $d_{90}$ = 50 $\mu$m, ganz bevorzugt kleiner als 40 $\mu$m. Die Teilchen weisen eine Agglomeratstruktur auf, welche innere Poren (Intraporen) und äußere Poren (Interporen) besitzt. Als Intraporen sollen hier die Poren im Inneren von zusammenhängenden Agglomeraten bezeichnet werden, während mit Interporen die Poren bezeichnet werden, die abhängig von der Agglomeratgröße und -form, der Teilchengrößenverteilung und der daraus resultierenden Pakkungsdichte zwischen den einzelnen Agglomeraten auftreten.

Die Größe der Intraporen $d_{intra}$ hängt von der Agglomeratgröße $d_{50}$ ab. Intraporen sind stets gleichgroß oder kleiner als ein Viertel der Agglomeratgröße $d_{50}$ und sind gleichgroß oder größer als die Oberflächenrauhigkeit der Teilchen oder Agglomerate von 0,3 $\mu$m. Damit ergibt sich für den Größenbereich der Intraporen folgender Zusammenhang: Größe der Intraporen: 0,3 $\mu$m $\leq d_{intra} \leq d_{50}$/4

Das Intraporenvolumen ist das kumulative Intrusionsvolumen im Größenbereich der Intraporen. Die erfindungsgemäßen Lithiuminterkalationsverbindungen haben ein Intraporenvolumen von mindestens 0,08 ml/g. Die Größe der Intraporen und das Intraporenvolumen bestimmen die Leistungsfähigkeit und den bevorzugten Einsatzbereich der erfindungsgemäßen Lithiuminterkalationsverbindungen in sekundären Lithiumionenbatterien. So eignen sich diese Lithiuminterkalationsverbindungen umso besser zur Herstellung von Batterien, bei denen eine hohe Anfangsleistung und schnelle Energiefreisetzung, das heißt eine hohe Pulsbelastbarkeit, gewünscht ist, je größer die Intraporen und das Intraporenvolumen sind. Ist dagegen eine hohe Energieerzeugung gewünscht, werden für Intraporengröße und Intraporenvolumen kleinere Werte gewählt.

Das erfindungsgemäße Verfahren zur Herstellung von Lithiumoxid enthaltenden Lithiuminterkalationsverbindungen in Agglomeratform besteht mindestens aus drei Schritten:

I. Herstellung einer partikulären Vorläuferverbindung durch inniges Mischen, Tempern und Mahlen der Ausgangsstoffe,

II. Herstellung einer Suspension dieser partikulären Vorläuferverbindung in Wasser unter Zusatz eines polymeren Bindemittels, gefolgt von deren Sprühtrocknung, wobei Agglomerate erhalten werden, und

III. einem Temperschritt, bei dem die erfindungsgemäße poröse Lithiuminterkalationsverbindung erhalten wird.

Nachfolgend wird stellvertretend für verschiedene Lithiumoxid enthaltende Lithiuminterkalationsverbindungen die Synthese eines Lithiummanganinterkalationsoxids mit der erfindungsgemäßen Morphologie nach dem erfindungsgemäßen Verfahren beschrieben:

1.1. Inniges Mischen der Einsatzstoffe $Li_2CO_3$ und Manganoxid $Mn_3O_4$. Als Einsatzstoffe für die Herstellung eines Lithiummanganinterkalationsoxids sind auch verschiedene andere bekannte Mangan- und Lithiumverbindungen geeignet, z.B. $Li_2O_2$, $Mn_2O_3$, $MnO_2$ oder Mischungen aus Lithiumoxiden oder Manganoxiden, solange das Gemisch genügend aktiven Sauerstoff enthält. Als Manganverbindung ist $Mn_3O_4$ und als Lithiumverbindung $Li_2CO_3$

bevorzugt. Der aktive Sauerstoff fördert die Verbindung von Lithium mit Mangan beim Brennen. Die Menge (Anzahl Äquivalente) an aktivem Sauerstoff muß mindestens so groß sein wie die Anzahl der Lithiumatome. Aktiver Sauerstoff kann durch die Manganverbindung eingebracht werden, sofern die Manganwertigkeit größer als 2 ist. Jede Mn-Wertigkeit größer als 2 liefert ein Äquivalent aktiven Sauerstoff, jede Mn-Wertigkeit größer als 3 liefert zwei Äquivalente aktiven Sauerstoff, usw. Aktiver Sauerstoff kann auch durch die Lithiumverbindung eingebracht werden, wobei jede formale Li-Wertigkeit größer als 1 (z.B. $Li_2O_2$) ein Äquivalent aktiven Sauerstoff liefert.

Der Mischvorgang dauert im allgemeinen zwischen 10 und 60 Minuten, bevorzugt jedoch 15 bis 45 Minuten. Als Mischer sind dabei alle gebräuchlichen Mischertypen einsetzbar, bevorzugt Mischer mit eingebauten Mahlwerkzeugen.

1.2. Temperung der Mischung, zweckmäßigerweise in einem Drehrohrofen, unter $N_2$, Argon, Luft, Sauerstoff oder einem Sauerstoff enthaltendem Gas bei 600-1000 °C mit einer Verweilzeit von 15-120 Minuten. Die Temperung findet bevorzugt unter Stickstoff mit einer Temperatur von 700 bis 900 °C und einer Verweilzeit von 30 - 90 Minuten statt.

1.3. Mahlung der getemperten Mischung, bis ein feinteiliges Gemisch erhalten wird. Als geeignete Mühlen seien hier beispielsweise Stiftmühlen, Pralltellermühlen, Universalmühlen, Strahlmühlen o. ä., gegebenenfalls mit Sichtung, genannt. Es können auch mehrere Mahlprozesse hintereinander in gleichen oder verschiedenen Mühlen ausgeführt werden.

Die Mahlung erfolgt solange, bis die Korngrößen der erhaltenen Partikel $d_{90}$-Werte von kleiner als 30 μm erreicht haben.

1.4. optionaler zusätzlicher Arbeitsschritt: erneute Temperung wie in Punkt 1.2, wobei die Temperatur gleich oder höher sein kann als in Punkt 1.2, jedoch nicht höher als 1000 °C und bevorzugt nicht höher als 900 °C ist. Die Verweilzeit liegt ebenfalls bei 15 -120 Minuten.

1.5. optionaler zusätzlicher Arbeitsschritt: erneute Mahlung wie in Punkt 1.3., wobei eine gleiche oder eine andere Mühle als bei 1.3 gewählt werden kann und gleiche oder von 1.3 verschiedene Korngrößen und Korngrößenverteilungen erzielt werden.

2.1. Herstellung einer Suspension der mit den Arbeitsschritten 1.1 bis 1.3 oder 1.1 bis 1.5 erzeugten partikulären Vorläuferverbindung in Wasser unter Zusatz eines mindestens teilweise wasserlöslichen, polymeren Bindemittels (wobei unter polymer mindestens ein Vielfaches, also mindestens Dreifaches eines oder mehrerer Monomeren verstanden werden soll).

Als polymere Bindemittel sind Wasserstoffbrücken bildende Polymere wie Zellulose, Stärke, Gelatine, Polyacrylate, Polyvinylalkohol und Polyvinylacetate in Konzentrationen von 0,1 bis 5 Gew.%, bezogen auf das Gesamtgewicht der eingesetzten Feststoffe, geeignet. Wird weniger Bindemittel eingesetzt, reicht dessen bindende Wirkung in der Regel nicht aus, um in den weiteren Arbeitsschritten die gewünschte Agglomeratbildung in ausreichendem Umfang zu gewährleisten. Eine über den angegebenen Bereich erhöhte Menge an polymerem Bindemittel steigert die bindende Wirkung bei erheblichem Kostenanstieg kaum, kann jedoch bei den im weiteren Verfahren vorherrschenden hohen Temperaturen zur spontanen Verbrennung der Produkte führen.

Bevorzugt wird Polyvinylalkohol in einer Menge von 1 bis 2 Gew.% als polymeres Bindemittel zugesetzt.

Die Herstellung der Suspension kann nach allgemein bekannten Verfahren unter Verwendung bekannter Apparaturen, z. B. Kessel oder Rührwerke, erfolgen.

2.2. Trocknung der Suspension unter Bildung von Agglomeraten der partikulären Vorläuferverbindung. Die Trocknung wird dabei als Sprühtrocknung mittels dafür als geeignet bekannter Verfahren und Apparaturen ausgeführt. Dabei ist es bevorzugt, wenn der Sprühtrockner mit einer Zweistoffdüse oder einer Zerstäuberscheibe mit hoher Geschwindigkeit betrieben wird. Die Trocknung erfolgt bei einer Abgastemperatur von 100 bis 150 °C, bevorzugt von 105 bis 120 °C. Die Restfeuchte der erhaltenen getrockneten Agglomerate sollte 5% nicht überschreiten. Die Agglomerate sollten anschließend nicht mehr angefeuchtet oder gemahlen werden.

3. Temperung der trockenen Agglomerate unter einer oxidierenden Atmosphäre bei 450-900 °C mit einer Verweilzeit von 0,5 bis 10 Stunden.

Bei diesem Schritt wird das Bindemittel im allgemeinen rückstandslos abgebrannt. Die Temperung kann dabei in einem Drehrohrofen bevorzugt bei 725°C bis 900°C und - falls der Ofen mit mehreren Heizzonen ausgestattet ist - einer in der letzten Heizzone abgesenkten Temperatur von 450-750 °C ausgeführt werden. Die Verweilzeit beträgt bevorzugt 0,5-6 Stunden. Die oxidierende Atmosphäre wird bevorzugt mit Sauerstoff erzeugt.

Die Temperung kann ebenso in einem stationären Ofen unter einer oxidierenden Atmosphäre bei einer bevorzugten Temperatur von 600°C bis 750 °C mit einer Verweilzeit von bevorzugt mehr als 5 Stunden erfolgen. Auch hier wird die oxidierende Atmosphäre bevorzugt mit Sauerstoff erzeugt.

4. Optionaler zusätzlicher Arbeitsschritt: Suspendieren der Lithiummanganoxidinterkalationsverbindung unter Zusatz eines oder mehrerer alkalischer Lithiumsalze in Wasser und anschließendes Sprühtrocknen bei Temperaturen von 100°C bis 400 °C. Geeignete alkalische Lithiumsalze sind z.B. $Li_2CO_3$, $Li_2O_2$, $LiNO_3$, $LiOH$ oder Gemische aus zwei oder mehreren davon. Bevorzugt wird $Li_2CO_3$ eingesetzt. Der Sprühtrocknung kann sich eine Nachtrocknung bei Temperaturen von 100 bis 300 °C in sauerstoffhaltiger Atmosphäre, bevorzugt in Luft, anschließen.

Zur Erleichterung der Sinterung kann in den Arbeitsschritten 1.1 bis 2.2 ein Sinterhilfsmittel in einer Konzentration von 0,1 bis 3 Gew.%, bezogen auf den Feststoffgehalt, hinzugefügt werden. Die Zugabe des Sinterhilfsmittels erfolgt dabei vorzugsweise bei der Herstellung der Mischung, Schritt 1.1, aber auch bei der Herstellung der Suspension, Schritt 2.1. Als Sinterhilfsmittel wird vorzugsweise ein Boroxid, und besonders bevorzugt $H_3BO_3$, eingesetzt.

Es ist auch möglich, die Agglomerate im Arbeitsschritt 3 zunächst unter nicht oxidierenden Bedingungen zu tempern. Diesem Schritt muß jedoch notwendigerweise eine Temperung unter einer oxidierenden Atmosphäre wie im Schritt 3 beschrieben folgen. Diese Verfahrensweise erhöht Dauer und Kosten des Herstellungsverfahrens stark und ist daher nicht bevorzugt.

Dünnfilmelektroden, welche die nach dem erfindungsgemäßen Verfahren hergestellten agglomerierten Lithiumoxidverbindungen enthalten, können wie folgt hergestellt werden:

In einen mit Stahlkugeln gefüllten Metallzylinder werden die erfindungsgemäße Lithiumoxid enthaltende Lithiuminterkalationsverbindung, Graphit und Leitruß eingewogen. Der Zylinder wird verschlossen und auf einem Rollbrett gerollt, wobei die Pigmente gut vermischt werden. Anschließend wird dem Pigmentgemisch eine Lösung aus einem allgemein gebräuchlichen Elektrodenbindemittel, beispielsweise einem fluorhaltigen Polymeren mit einem Fluorgehalt von größer als 50 Gew.%, und einem geeigneten Lösungsmittel oder Lösungsmittelgemisch in geeigneter Menge zugegeben und der Zylinder wiederum auf dem Rollbrett gerollt, bis eine maximale Teilchengröße im Bereich von 10 bis 90 µm unterschritten wird. Die so erhaltene Suspension wird auf eine dünne Aluminiumfolie aufgegossen und eine Naßschichtdicke von 150 bis 600 µm mittels eines Rakels mit einstellbarer Spaltgröße eingestellt. Anschließend wird das Lösungsmittel entfernt und die Folie bei einer Temperatur im Bereich von 80 bis 150 °C getempert. Zur Einstellung einer niedrigeren Porosität wird die beschichtete Folie unter Druck zwischen Stahlwalzen verpreßt. Anschließend wird die Folie in geeignet große Teile zerlegt und diese im Vakuum wasserfrei getrocknet.

Zur Herstellung einer sekundären Lithiumionenbatterie wird eine nach dem oben beschriebenen Verfahren hergestellte Dünnfilmelektrode als Kathode verwendet. Als Anode wird eine Lithiumelektrode oder eine Dünnfilmelektrode eingesetzt, welche aus Graphit, Kohlenstoff oder einem anderen zur Aufnahme von Lithiumionen fähigen Material und einem geeigneten Bindemittel besteht. Diese Elektroden werden zusammen mit einem Separator und einem Elektrolyten sowie gegebenenfalls weiteren Bestandteilen in einem Gehäuse zu einer Sekundärbatterie zusammengesetzt und geladen. Derart hergestellte sekundäre Lithiumionenbatterien weisen hervorragende Gebrauchseigenschaften auf.

Die nach dem erfindungsgemäßen Verfahren hergestellten Lithiumoxidinterkalationsverbindungen weisen die in Anspruch 1 beschriebene Morphologie auf und lassen sich vorteilhaft zur Herstellung von Dünnfilmelektroden verwenden. Die erfindungsgemäßen Lithiumoxid enthaltenden Lithiuminterkalationsverbindungen beeinflussen die Gebrauchseigenschaften von sekundären Lithiumionenbatterien, die solche als aktives Material der positiven Elektrode enthalten, in großem Maße positiv. So ist es zum Beispiel möglich, durch Einstellung des Intraporenvolumens auf die erforderlichen Werte die vorzugsweise Eignung der Interkalationsverbindungen für Zellen mit hoher Leistung oder hoher Energiefreisetzung im voraus zu bestimmen, wobei sowohl eine hohe spezifische Ladung wie auch eine hohe Belastbarkeit der Zellen gewährleistet werden kann.

Ein weiterer Vorteil der Erfindung besteht darin, daß die erhaltenen Lithiuminterkalationsverbindungen unabhängig von der Art der außer Lithium und Sauerstoff noch vorhandenen anderen Elemente, z. B. Cobalt und/oder Nickel, und unabhängig von ihrer Kristallstruktur (Spinell oder Schichtstruktur) mit dem erfindungsgemäßen Verfahren in der erfindungsgemäßen Morphologie hergestellt werden können und die damit verbundenen Vorteile aufweisen.

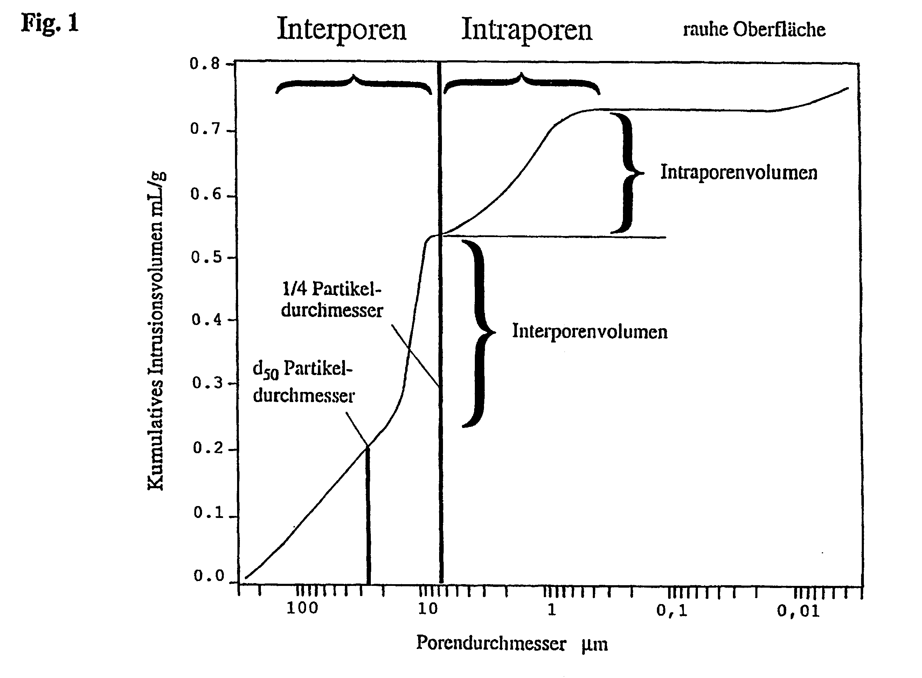

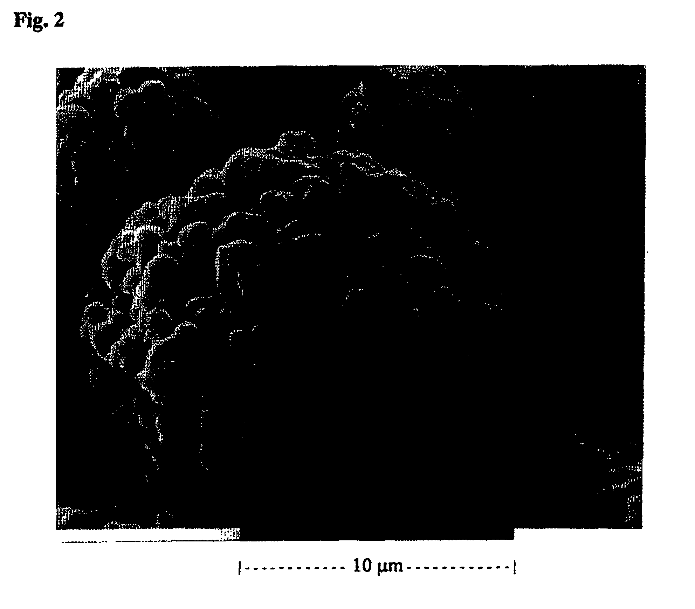

Die Erfindung soll nachfolgend anhand der Figuren 1 und 2 sowie mehrerer Beispiele genauer beschrieben werden, ist jedoch nicht auf diese beschränkt.

Fig. 1     zeigt die Beziehung zwischen dem Porendurchmesser und dem kumulativen Porenintrusionsvolumen für einen Li/ Mn-Spinell a gemäß Beispiel 1

Fig. 2     zeigt die elektronenmikroskopisch vergrößerte Aufnahme eines Li/ Mn-Spinells b gemäß Beispiel 2

Ausführungsbeispiele:

Beispiel 1: Herstellung eines Li/Mn-Spinells a

1.1. Mischen

In einem Trommelmischer mit 3 Messerköpfen (2 m$^3$ Inhalt, Firma Lödige) wurden 712 kg Manganoxid ($Mn_3O_4$ der Firma Fermac, Ludwigshafen, nach Mahlung in einer Stiftmühle 250 Z der Firma Alpine) und 184,5 kg Lithiumcarbonat (kleiner 40 μm gemahlene Ware der Firma Chemetall, Frankfurt) in 30 Minuten gemischt. An der Mischung wurden folgende Meßwerte erhalten: Schüttdichte: 0,7 g/ml, Stampfdichte: 1,3 g/ml, spezifische Oberfläche: 12 m$^2$/g.

1.2. und 1.3. Temperung unter $N_2$ und Mahlung

Die Mischung aus 1.1 wurde in einem gasbeheizten Drehrohrofen (Firma Elino, 3,2 m Länge der Heizzone, 300 mm Durchmesser) getempert. Die Brenntemperatur betrug 750±10 °C. Durch das Rohr wurden 11 m$^3$ Stickstoff pro Stunde im Gleichstrom geleitet. Die Ofenatmosphäre wurde durch eine Taktschleuse am Rohrende gegen die Umgebungsluft geschützt, so daß der Sauerstoffgehalt im Drehrohr unter 1% sank. Die Mischung wurde mit ca. 30-40 kg/h in das Rohr dosiert. Das Rohr drehte sich mit 2 Umdrehungen pro Minute. Die Neigung des Rohres lag bei 0,5 Grad, so daß die Verweilzeit des Produkts in der Heizzone etwa 1 Stunde betrug. Ein Vorlauf von wenigen Kilogramm Produkt wurde verworfen. Anschließend wurden 500 kg Brennware gesammelt. Das Produkt wurde in einer Stiftmühle (250 Z Firma Alpine) gemahlen. Es wurden folgende Meßwerte erhalten: Schüttdichte: 0,8 g/ml, Stampfdichte: 1,0 g/ml, spezifische Oberfläche: 3 m$^2$/g.

1.4. und 1.5. Temperung unter $N_2$ und Mahlung

Die gemahlene Brennware aus 1.3 wurde in dem gasbeheizten Drehrohrofen (siehe oben) erneut getempert. Die Brenntemperatur betrug 825°C. Durch das Rohr wurden 10±1 m$^3$/h Stickstoff im Gleichstrom durchgeleitet. Die Ofenatmosphäre wurde durch eine Taktschleuse am Rohrende gegen die Umgebungsluft geschützt, so daß der Sauerstoffgehalt im Drehrohr unter 1% lag. Die Mischung wurde mit ca. 25 kg/h in das Rohr dosiert. Das Rohr drehte sich mit 2 Umdrehungen pro Minute. Die Neigung des Rohres lag bei 0,5 Grad, so daß die Verweilzeit des Produkts in der Heizzone etwa 1 Stunde betrug. Ein Vorlauf von wenigen Kilogramm Produkt wurde verworfen. Anschließend wurden 169,5 kg Brennware gesammelt. Das Produkt wurde in einer Stiftmühle (250 Z Firma Alpine) gemahlen. Es wurden folgende Meßwerte erhalten: Schüttdichte: 0,8 g/ml, Stampfdichte: 1,4 g/ml, spezifische Oberfläche: 1,1 m$^2$/g.

1.5.1 Wiederholung der Mahlung

Da das Produkt aus 1.5 noch geringfügig kratzende Anteile enthielt, wurde die Mahlung einer Teilmenge von 54 kg in einer Mühle mit Sichterrad (Typ ZPS 50, Firma Alpine) wiederholt. Die Mühlenrotordrehzahl lag bei 15000 U.p.M., das Sichterrad drehte sich mit 4000 U.p.M. Es wurden folgende Meßwerte der sichtergemahlenen Ware erhalten: Schüttdichte: 1,0 g/ml, Stampfdichte: 1,3 g/ml, spezifische Oberfläche: 1,4 m$^2$/g, Teilchengrößenverteilung: $d_{10}$ =1,0 μm, $d_{50}$ = 3,0 μm, $d_{90}$ = 14 μm.

2.1 und 2.2. Herstellung und Trocknung der Suspension

Es wurde eine Suspension von 2 kg der sichtergemahlenen Ware aus 1.5.1, 4 Liter Wasser und eine Lösung von 20 g Polyvinylalkohol (Mowiol 5-88, Firma Hoechst) in 2 Liter Wasser (welche zweckmäßigerweise zuvor in der Siedehitze hergestellt wird) in einem Becherglas gerührt und in einem Sprühtrockner (Firma Niro, Typ Minor) unter Verwendung eines Zerstäuberrades in ca. 1,5 Stunden getrocknet. Der Zerstäubergasdruck betrug ca. 4,8 bar. Die Heizgastemperatur betrug 350±5 °C, die Abgastemperatur lag bei 110±5 °C. Bei dieser Synthese wurden 1,45 kg Pigment im Sammelgefäß unter dem Zyklon isoliert. Es wurden folgende Meßwerte erhalten: Schüttdichte: 1,1 g/ml, Stampfdichte: 1,3 g/ml, spezifische Oberfläche: 1,5 m$^2$/g.

3. Temperung unter einer oxidierenden Atmosphäre

Das sprühgetrocknete Pulver aus 2.2 wurde in einem elektrisch beheizten Drehrohrofen getempert. Das Pulver wurde mit ca. 0,1 kg/h in das Rohr dosiert. Die maximale Brenntemperatur betrug 775°C (Länge der Heizzone 78 cm). Durch das Rohr (Durchmesser 5 cm) wurden 50 l/h Sauerstoff im Gleichstrom geleitet. Das Rohr drehte sich mit 1/2 Umdrehung pro Minute, so daß die Verweilzeit des Produkts in der Heizzone etwa 1 Stunde erreichte. Die Neigung des Rohres lag bei 5 Grad. Eine kleine Teilmenge (Vorlauf) wurde verworfen. Anschließend wurden 1,4 kg Brennware gesammelt. Es wurden folgende Meßwerte erhalten:

Schüttdichte: 0,8 g/ml, Stampfdichte: 1,1 g/ml, spezifische Oberfläche: 0,7 m$^2$/g, pH: 8,9, Teilchengrößenverteilung: $d_{10}$ = 10 μm, $d_{50}$ = 27 μm, $d_{90}$ = 44 μm.

Die Porengrößenverteilung in der entstandenen Lithiummanganspinellinterkalationsverbindung wurde mit der Quecksilberporosimetriemethode bestimmt. Deutlich waren Poren der Größe von etwa 1 μm erkennbar. Das inkrementelle Intrusionsvolumen bei 1 μm Porengröße erreichte ein lokales Maximum von 0,01 ml/g. Weiterhin wurden Poren (Interporen) von 10 μm Größe beobachtet, was daran erkennbar war, daß das inkrementelle Intrusionsvolumen bei 10 μm Porengröße ein lokales Maximum von 0,07 ml/g erreichte. Das Intraporenvolumen, also das kumulative Intrusionsvolumen im Größenbereich der Intraporen von 0,3 bis 6,8 μm dieses Spinells betrug 0,20 ml/g. Die Beziehung von kumulativem Intrusionsvolumen und Porendurchmesser ist in Figur 1 dargestellt.

Anschließend wurden die Pulverladungsdaten bestimmt. Es wurde ein Wert von 109 Ah/kg Pulver bei der 5. Entladung (Lithium-Einlagerung) gefunden.

Beispiel 2: Herstellung eines Li/Mn-Spinells b

Die Schritte 1.1 bis 1.5.1 aus Beispiel 1 wurden wiederholt.

2.1. und 2.2. Herstellung und Trocknung der Suspension

Es wurde eine Suspension von 4 kg der sichtergemahlenen Ware aus 1.5.1, 3 Liter Wasser und eine Lösung von 60 g Polyvinylalkohol (Mowiol 5-88, Firma Hoechst) in 2 Liter Wasser (welche zweckmäßigerweise zuvor in der Siedehitze hergestellt wird) in einem Becherglas gerührt und in einem Sprühtrockner (Firma Niro, Typ Minor) unter Verwendung einer Zweistoffdüse in ca. 3 Stunden getrocknet. Die Heizgastemperatur betrug 240±20 °C, die Abgastemperatur lag bei 105±3 °C. Der Zerstäubergasdruck betrug ca.1,8 bar.

3. Temperung unter einer oxidierenden Atmosphäre

Das sprühgetrocknete Pulver aus 2.2 wurde in einem elektrisch beheizten Drehrohrofen getempert. Das Pulver wurde mit ca. 4,5 kg/h in das Rohr dosiert. Die Brenntemperatur betrug 775°C (Länge der Heizzone 140 cm). Durch das Rohr (Durchmesser 25 cm) würden 1,5 m$^3$ pro Stunde Sauerstoff im Gleichstrom geleitet. Das Rohr drehte sich mit 4/3 Umdrehungen pro Minute und wurde jede Viertel-Umdrehung eine Minute lang angehalten, so daß die Verweilzeit des Produkts in der Heizzone etwa 4 Stunden erreichte. Die Neigung des Rohres lag bei 0,25 Grad. Eine kleine Teilmenge (Vorlauf) wurde verworfen. Anschließend wurden 6,9 kg Brennware gesammelt. Es wurden folgende Meßwerte erhalten: Schüttdichte: 1,0 g/ml, Stampfdichte: 1,3 g/ml, spezifische Oberfläche: 0,9 m$^2$/g, pH: 8,1, Teilchengrößenverteilung: $d_{10}$ =6 μm, $d_{50}$ = 15 μm, $d_{90}$ = 28 μm.

Anschließend wurden die Pulverladungsdaten bestimmt. Es wurde ein Wert von 115 Ah/kg für die 5. Entladung des Pulvers ermittelt.

4. Suspendieren und Sprühtrocknen mit $Li_2CO_3$

Es wurde eine Suspension von 2,95 kg der Brennware aus 3., 2,95 Liter Wasser und 29,5 g Lithiumcarbonat mit einem Turrax-Dispergieraggregat in einem Becherglas gerührt und in einem Sprühtrockner (Firma Niro, Typ Minor) unter Verwendung einer Zweistoffdüse in 1 Stunde getrocknet. Die Heizgastemperatur betrug 350±10 °C, die Abgastemperatur lag bei 108±4 °C. Der Zerstäubergasdruck betrug 2,2 bar. Es wurden 2,2 kg Li/Mn-Spinell mit $Li_2CO_3$-Schicht erhalten. Die Teilchengrößenverteilung war folgendermaßen: $d_{10}$ =5 μm, $d_{50}$ = 12 μm, $d_{90}$ = 24 μm, spezifische Oberfläche: 1,2 m$^2$/g. Zuletzt wurde das Pulver 1 Stunde in einem Trockenschrank bei 300 °C an Luft getrocknet.

Auf einer elektronenmikroskopisch vergrößerten Aufnahme ( siehe Figur 2) waren zusammenhängende, kugelförmige, poröse Agglomerate von etwa 10-20 μm Durchmesser zu erkennen. Die Agglomerate erschienen zusammengesetzt aus an Kanten teilweise versinterten Primärteilchen von 1-3 μm Durchmesser. Im Inneren der kugelförmigen Aggregate waren Poren (Intraporen) von etwa 1 μm Größe gut erkennbar.

Die Porengrößenverteilung wurde außerdem mit der Quecksilberporosimetriemethode bestimmt. Deutlich war eine Häufung von Poren der Größe 1,0±0,5 μm erkennbar; das inkrementelle Intrusionsvolumen erreichte bei 1 μm Porengröße ein lokales Maximum von 0,01 ml/g. Weiterhin wurden Poren (Interporen) von 4,5±1,5 μm Größe beobachtet, was daran zu erkennen war, daß das inkrementelle Intrusionsvolumen bei 5 μm Porengröße ein lokales Maximum von 0,048 ml/g erreichte. Das kumulative Intrusionsvolumen im Bereich von 0,3 bis 3 μm ( Intraporenvolumen) betrug 0,14 ml/g.

Bei der Bestimmung der Pulverladungsdaten wurde ein Wert von 107 Ah/kg bei der 5. Entladung gefunden.

Die elektronenmikroskopisch vergrößerte Aufnahme eines auf diese Weise hergestellten Li/Mn Spinells zeigt Figur 2.

Beispiel 3: Herstellung einer pigmentbeschichteten Dünnfilmelektrode 1

In einen Metallzylinder von 6 Liter Volumen, welcher mit 3100 g Stahlkugeln mit einem Durchmesser von 4 bis 6 mm gefüllt war, wurden folgende Pigmente eingewogen: 1223 g Lithiummanganoxid (Li/Mn-Spinell) gemäß Beispiel 1 mit einer spezifischen Oberfläche von 0,7 m$^2$/g, 72 g Leitruß mit einer spezifischen Oberfläche im Bereich von 40 bis 400 m$^2$/g und 72 g Graphit. Der Metallzylinder wurde verschlossen und die Pigmente durch Rollen auf dem Rollbrett gut durchmischt. Anschließend wurden 81 g eines Copolymeren aus Vinylidenfluorid und Hexafluorpropylen in einem Lösungsmittelgemisch aus 980 g Tetrahydrofuran (THF) und *245* g N-Methylpyrrolidon (NMP) zugegeben. Die Mischung wurde 3,5 Stunden auf dem Rollbrett gerollt, bis die maximale Teilchengröße 28 μm erreicht hatte. Die Pigmentsuspension wurde von den Stahlkugeln abgesiebt. Anschließend wurde die Suspension mittels einer Motorrakel mit einstellbarer Spaltgröße auf eine 25 μm dicke Aluminiumfolie gegossen. Nach dem Abdampfen der Lösungsmittel wurde die beschichtete Folie 2 Stunden lang bei 160 °C getempert und anschließend zwischen zwei Stahlwalzen unter einem Druck von 6 bar verpreßt. Zur Herstellung von Prüflingen wurden Scheiben von 36 mm Durchmesser ausgestanzt und über Nacht im Vakuum wasserfrei getrocknet. Es wurde ein Flächengewicht von 275 g pro Quadratmeter gefunden. Die Schichtdicke betrug 115 μm und die Porosität 34 Vol.%. Der spezifische Widerstand der Schicht einschließlich der Folie und des Übergangswiderstandes wurde mit 65 Ωcm bestimmt.

Die Prüflinge wurden in einer elektrochemischen Zelle mit Lithiummetall als Gegenkathode geprüft. Für die Elektrode gemäß Beispiel 3 wurden folgende elektrochemische Werte gemessen [Li-Auslagerung (Ladung) / Li- Einlagerung ( Entladung)]:

Kapazität 1. Zyklus: 112/104 mAh/g für die Schicht und 132/122 mAh/g für den Spinell
Kapazität 10. Zyklus: 99/98 mAh/g für die Schicht und 117/115 mAh/g für den Spinell
Belastbarkeit: 96,5 %

Beispiel 4: Herstellung einer pigmentbeschichteten Dünnfilmelektrode 2

In eine Apparatur gemäß Beispiel 3 wurden folgende Pigmente eingewogen: 1259 g Lithiummanganoxid (Li/Mn-Spinell) gemäß Beispiel 2 mit einer spezifischen Oberfläche von 1,0 m$^2$/g, 76 g Leitruß mit einer spezifischen Oberfläche von 40 bis 400 m$^2$/g und 76 g Graphit. Nach der Durchmischung der Pigmente wurde eine Lösung aus 86 g eines polymeren fluorhaltigen Bindemittels mit einem Fluorgehalt von 70 Gew.% in einem Lösungsmittelgemisch aus 769 g Tetrahydrofuran (THF) und 330 g N-Methylpyrrolidon (NMP) zugegeben. Die Mischung wurde 2 Stunden auf dem Rollbrett gerollt, bis die maximale Teilchengröße 14 μm erreicht hatte. Die Pigmentsuspension wurde wie in Beispiel 3 weiterbehandelt und anschließend auf eine Aluminiumfolie gegossen, getempert und verdichtet. Zur Herstellung von Prüflingen wurden Scheiben von 36 mm Durchmesser ausgestanzt und über Nacht im Vakuum wasserfrei getrocknet. Es wurde ein Flächengewicht von 251 g pro Quadratmeter gefunden. Die Schichtdicke betrug 104 μm und die Porosität 33 Vol.%. Der spezifische Widerstand der Schicht einschließlich der Folie und des Übergangswiderstandes wurde mit 120 Ωcm bestimmt. Die Prüflinge wurden in einer elektrochemischen Zelle mit Lithiummetall als Gegenkathode geprüft.

Für die Elektrode gemäß Beispiel 4 wurden folgende elektrochemische Werte gemessen:

Kapazität 1.Zyklus: 102/95 mAh/g für die Schicht und 122/113 mAh/g für den Spinell
Kapazität 10. Zyklus: 92/91 mAh/g für die Schicht und 109/108 mAh/g für den Spinell
Belastbarkeit: 95,2 %

Vergleichsbeispiel:

In eine Apparatur gemäß Beispiel 3 wurden 1147 g eines handelsüblichen Lithiummanganoxids (Li/ Mn-Spinell) mit einem Intraporenvolumen von 0,04 ml/g im Größenbereich der Intraporen von 0,3 bis 6,8 μm sowie einem Volumen aus der Rauhigkeit der Oberfläche (Poren < 0,3 μm) von 0,04 ml/g, einer spezifischen Oberfläche von 1,2 m$^2$/g, 70 g Graphit gemäß Beispiel 3 sowie 70 g Leitruß gemäß Beispiel 3 eingewogen. Als Bindemittel wurde eine Lösung von 71 g des Copolymeren aus Beispiel 3 in einem Lösungsmittelgemisch aus 890 g THF und 222 g NMP eingesetzt. Hier wurden Bindemittel- und Lösungsmittelmengen der vergrößerten Oberfläche des Spinells angepaßt.

Die Apparatur wurde auf dem Rollbrett gerollt bis die maximale Teilchengröße von 30 μm erreicht war. Die Beschichtung und Verdichtung der Schicht auf der Aluminiumfolie erfolgte wie in Beispiel 3. Es wurde ein Flächengewicht von 237 g/m$^2$, eine Schichtdicke von 101 μm, eine Porosität von 34 Vol.% und ein spezifischer Widerstand (einschließlich Aluminiumfolie und Übergangswiderstand) von 25 $\Omega$cm ermittelt.

Aus der so hergestellten Elektrodenfolie wurden Prüflinge mit einem Durchmesser von 36 mm ausgestanzt und in einer Zelle mit Lithiummetall als Gegenelektrode geprüft.

Es wurden folgende elektrochemische Werte gemessen:

Kapazität 1.Zyklus: 116/107 mAh/g für die Schicht und 139/128 mAh/g für den Spinell

Kapazität 10. Zyklus: 107/105 mAh/g für die Schicht und 127/126 mAh/g für den Spinell

Belastbarkeit: 85,7 %

Analytische Untersuchungen:

1. Porengrößenverteilung:

Die Porengrößenverteilung im Porengrößenbereich zwischen 0,01 und 100 µm wurde mit der Quecksilberporosimetriemethode mit einem Autopore II Gerät (nach DIN 66133 ) bestimmt. Mit dieser Methode können u. a. Intraporen, also die Poren innerhalb eines zusammenhängenden Agglomerates und Interporen, also die Poren zwischen verschiedenen Agglomeraten erfaßt werden. Auch weitere Poren (größer als 50 µm), die sich aus der lockeren Schüttung eines Pulvers ergeben ebenso wie Poren (kleiner als ca. 0,3 µm), die mit der Rauhigkeit der Oberfläche zusammenhängen, werden erfaßt.

Zusätzlich können Intraporen mit Hilfe von elektronenmikroskopischen Aufnahmen sichtbar gemacht werden. Interporen sind natürlicherweise von der Teilchengröße, der Teilchengrößenverteilung und der Form abhängig. So beträgt die Interporengröße in etwa ein Drittel der Teilchengröße.

2. Spezifische Oberfläche:

Die spezifische Oberfläche (BET) wurde mit einem Ströhlein-Areameter der Firma Ströhlein, Düsseldorf, nach dem Einpunkt-Differenz-Verfahren nach Haul und Dümbgen (in Anlehnung an DIN 66131) bestimmt. Die Trocknung der Pigmente erfolgte bei 140 °C während mindestens 12 Stunden.

3. Teilchengrößenverteilung:

Die Teilchengrößenverteilung wurde per Laserbeugung in einem SYMPATEC HELOS Gerät bestimmt. Dabei wurde eine Spatelspitze des zu untersuchenden Pulvers in das zirkulierende Wasserbad gegeben (optische Konzentration: ca. 15-50%). Die Teilchen wurden 50 Sekunden vor und während der 10 Sekunden dauernden Messung mit Ultraschall verteilt. Bei dieser Messung wird im wesentlichen der Durchmesser der zusammenhängenden Agglomerate erfaßt.

4. Pulverladungsdaten:

Die Pulverladungsdaten wurden folgendermaßen bestimmt:

Zunächst wurden Hilfsstoffe in einer Mühle gemischt: 1 g Ruß (z.B. Vulcan XC-72 oder Ensaco 250) plus 1 g Graphit (SFG 10) plus 2,2 g PVDF (Aldrich).

Mit einem Schnellrührer wurde ein Lack aus 2 g Spinell plus 0,4 g Hilfsstoffe in NMP (N-Methylpyrrolidon) gerührt. Zur Herstellung der zu prüfenden Schicht wurde der Lack in bis zu 4 Wiederholungsgängen auf den jeweils vorgetrockneten und leicht erwärmten Titan-Ableiter gesprüht. Die Fläche des Stromableiters betrug 1,3 cm$^2$. Zwischendurch wurde der Lack jedesmal mit dem Schnellrührer homogenisiert und sofort weiterverarbeitet, um einer möglichen Entmischung der Feststoffe entgegenzuwirken.

Der Lack wurde mit Hilfe einer Sprühpistole (air brush Sprühpistole) auf den vorgewärmten Titanableiter gesprüht und getrocknet. Der für die Reproduzierbarkeit und Richtigkeit der Messung kritischste Schritt war die Wägung der getrockneten Schicht auf dem Ti-Ableiter. Die Schicht wog etwa 25 mg; sie wurde mit 0,1 mg Auflösung gewogen, entsprechend einem Fehler von 0,4%, bei Differenzwägung maximal 0,8%, im Mittel jedoch weniger.

Die Elektroden wurden im Ölpumpenvakuum bei 120 °C mindestens 12 Stunden lang getrocknet, bevor sie in einem mit Argon gefüllten Handschuhkasten zu einer elektrochemischen Zelle zusammengebaut wurden. Als Anode wurde Lithiummetall (Aldrich, 99,9%, 0,75 mm Dicke) verwendet und weiterhin wurde die handelsübliche Elektrolytlösung LP 30 (1 M LiPF$_6$ in Ethylencarbonat/ Dimethylcarbonat 1:1, Fa. Merck) verwendet. Der Separator war ein Glasflies von ca. 2 mm Dicke. Die Geometrie der Ladungsmeßzellen ist beschrieben in P. Novák, W. Scheifele, F. Joho, O.

Haas, *J. Electrochem. Soc.* **142**, 2544 (1995), siehe dort insbesondere Abbildung 1 (es wurde jedoch ohne die dort gezeigte Referenzelektrode gearbeitet).

Die Ladungen und Entladungen erfolgten im Potentialbereich zwischen 3,3 und 4,4 Volt mit konstanten Strömen von 10 µA pro Milligramm Oxid, was zu Lade- und Entladedauern in der Größenordnung von jeweils über 10 Stunden führte.

5. Folienladungsdaten:

Die Folienladungsdaten wurden folgendermaßen bestimmt:

Die mit Lithiuminterkalationsoxid beschichteten Aluminiumabschnitte (Durchmesser 36 mm) wurden in der Schleuse einer Handschuhbox bei 120 °C unter dem Vakuum einer Ölpumpe (Druck ca. $10^{-2}$ mbar) mindestens 12 Stunden lang getrocknet. Anschließend wurden sie unter trockener sauerstofffreier Argonatmosphäre weiterverarbeitet. Eine elektrochemische Zelle wurde hergestellt, indem ein Stapel aus dem beschichteten Aluminiumscheibchen, einem Separatorscheibchen (Celgard 2502, Firma Hoechst) und einem Lithiummetallscheibchen (Chemetall, 99%, 0,25 mm Dicke) zusammengefügt, mit handelsüblicher Elektrolytlösung LP 40 (1 M $LiPF_6$ in Ethylencarbonat/ Diethylcarbonat 1:1, Fa. Merck) getränkt und zwischen zwei abgedichteten Stahlplatten unter einem Druck von ca. 6 bar zusammengepreßt wurde. Die Stahlplatte, die die beschichtete Aluminiumfolie berührte, war der Pluspol, die Stahlplatte, die das Lithiumscheibchen berührte, war der Minuspol. Die Ladungen und Entladungen erfolgten im Potentialbereich zwischen 3,3 und 4,3 Volt mit konstanten Strömen von etwa 40 µA pro Milligramm Oxid, was zu Lade- und Entladedauern in der Größenordnung von jeweils über 2 Stunden führte. Die Ladungen und Entladungen wurden mindestens 10 mal wiederholt.

6. Belastbarkeit:

Die Belastbarkeit der Zelle wurde folgendermaßen bestimmt: eine geladene Zelle (Startwert 4,3 V) wurde nach der zweiten Ladung mit dem dreifachen Strom, also etwa 120 µA pro Milligramm Oxid ( das entspricht einer Belastung von etwa 3 mA/cm$^2$), bis zur Entladeendspannung von 3,3 V schnellentladen. Die dabei ermittelte Ladung wurde ins Verhältnis zur Entladung mit einem 6mal kleineren Strom ( also etwa 20 µA/ mg Oxid) gesetzt.

$$\text{Belastbarkeit} = (\text{Kapazität mit Belastung von 3 mA/cm}^2) / (\text{Kapazität mit Belastung von}$$

$$0,5 \text{ mA/cm}^2) \times 100 \text{ (\%), gemessen im 2. Zyklus.}$$

7. Spezifischer Widerstand:

Der spezifische Widerstand der Schicht wurde folgendermaßen bestimmt: Ein runder Folienabschnitt von 10 cm$^2$ Fläche wurde zwischen zwei Metallplatten mit 6 bar zusammengepreßt und nach 10 Sekunden der Durchtrittswiderstand gemessen. Der spezifische Widerstand ist gleich dem Durchtrittswiderstand (Einheit $\Omega$) geteilt durch die Schichtdicke (Einheit cm) mal 10 cm$^2$.

8. Verfahren zur Bestimmung des Intraporenvolumens

Das Intraporenvolumen wurde wie folgt bestimmt: Die Porengrößenverteilung im Porengrößenbereich zwischen 0,01 und 100 mm wurde mit der Quecksilberporosimetriemethode mit einem Autopore II Gerät (nach DIN 66133) bestimmt. Daneben wurde der $d_{50}$ Wert der Teilchengrößenverteilung durch Laserbeugung bestimmt. Das Intraporenvolumen ist das Porenvolumen integriert im Bereich von 0,3 µm bis zum Wert $d_{50}/4$ ( µm).

**Patentansprüche**

**1.**  Lithiumoxid enthaltende Lithiuminterkalationsverbindungen für Dünnfilmelektroden in Form von Agglomeraten, wobei die Agglomerate

-    eine gemäß der BET-Methode bestimmte spezifische Oberfläche von 0,1 bis 3 m$^2$/g,
-    eine am $d_{50}$-Wert bestimmte Agglomeratgröße von größer als 6 µm ,
-    einen am $d_{90}$-Wert bestimmten Durchmesser von 100 µm oder kleiner und Intraporen mit einer Größe von 0,3 µm $\leq d_{intra} \leq d_{50}/4$ µm besitzen, sowie ein Intraporenvolumen von mindestens 0,08 ml/g aufweisen.

**2.** Lithiumoxid enthaltende Lithiuminterkalationsverbindungen gemäß Anspruch 1, wobei die spezifische BET-Oberfläche 0,3 bis 1,5 $m^2/g$ beträgt.

**3.** Lithiumoxid enthaltende Lithiuminterkalationsverbindungen gemäß Anspruch 1, wobei die spezifische BET-Oberfläche 0,5 bis 1,2 $m^2/g$ beträgt.

**4.** Lithiumoxid enthaltende Lithiuminterkalationsverbindungen gemäß den Ansprüchen 1 bis 3, wobei die am $d_{50}$-Wert bestimmte Agglomeratgröße größer als 10 μm ist.

**5.** Lithiumoxid enthaltende Lithiuminterkalationsverbindungen gemäß den Ansprüchen 1 bis 4, wobei der am $d_{90}$-Wert bestimmte Durchmesser kleiner als 50 μm ist.

**6.** Lithiumoxid enthaltende Lithiuminterkalationsverbindungen gemäß den Ansprüchen 1 bis 4, wobei der am $d_{90}$-Wert bestimmte Durchmesser kleiner als 40 μm ist.

**7.** Lithiumoxid enthaltende Lithiuminterkalationsverbindung gemäß Anspruch 1, wobei Lithiummanganoxid enthalten ist.

**8.** Lithiumoxid enthaltende Lithiuminterkalationsverbindung gemäß den Ansprüchen 2 bis 6, wobei Lithiummanganoxid enthalten ist.

**9.** Verfahren zur Herstellung von Lithiumoxid enthaltenden Lithiuminterkalationsverbindungen für Dünnfilmelektroden in Form von Agglomeraten gemäß Anspruch 1, durch

a) Herstellen eines innigen Gemisches aus einer oder mehreren Lithiumverbindungen und einer oder mehreren Übergangsmetallverbindungen und darauffolgendes Tempern und Mahlen, wobei eine feinteilige Mischung erhalten wird;

b) Suspendieren des feinteiligen Gemisches in Wasser unter Zusatz eines mindestens teilweise wasserlöslichen polymeren Bindemittels und nachfolgendes Sprühtrocknen, wobei Agglomerate erhalten werden; und

c) Tempern der trockenen Agglomerate in oxidierender Atmosphäre bei 450°C bis 900°C.

**10.** Verfahren zur Herstellung von Lithiummanganoxid enthaltenden Lithiuminterkalationsverbindungen für Dünnfilmelektroden in Form von Agglomeraten gemäß Anspruch 1, durch

a)

a1) Herstellen eines innigen Gemisches aus einer oder mehreren Lithiumverbindungen und einer oder mehreren Manganverbindungen, wobei mindestens eine dieser Verbindungen oder die Summe aus allen Verbindungen soviel aktiven Sauerstoff enthält, daß die Anzahl der Äquivalente an aktivem Sauerstoff gleich oder größer der Anzahl der Lithiumatome ist,

a2) Tempern des Gemisches unter Stickstoff, Argon, Luft, Sauerstoff oder einem Sauerstoff enthaltenden Gas bei 600 bis 1000 °C und einer Verweilzeit von 15 bis 120 min in einem Drehrohrofen,

a3) Mahlen des getemperten Gemisches zu einer feinteiligen Mischung;

b) Suspendieren der feinteiligen Mischung in Wasser unter Zusatz eines mindestens teilweise wasserlöslichen Bindemittels und nachfolgendes Sprühtrocknen, wobei Agglomerate erhalten werden;

c) Tempern der trockenen Agglomerate in oxidierender Atmosphäre bei 450°C bis 900 °C mit einer Verweilzeit von 0,5 bis 10 Stunden.

**11.** Verfahren gemäß Anspruch 10, wobei das Tempern gemäß a2) sowie das Mahlen gemäß a3) zwei- oder mehrfach ausgeführt werden.

**12.** Verfahren gemäß Anspruch 10 oder 11, wobei das Suspendieren in Wasser unter Zusatz von Polyvinylalkohol als Bindemittel ausgeführt wird.

13. Verfahren gemäß Anspruch 12, wobei Polyvinylalkohohl in einer Menge von 1 bis 2 Gew.%, bezogen auf das Gesamtgewicht der eingesetzten Feststoffe, zugesetzt wird.

14. Verfahren gemäß einem der Ansprüche 10 bis 13, wobei das Tempern in oxidierender Atmosphäre in einem Drehrohrofen bei einer Temperatur von 725°C bis 900°C mit einer Verweilzeit von 0,5 bis 6 Stunden ausgeführt wird.

15. Verfahren gemäß einem der Ansprüche 10 bis 13, wobei das Tempern in oxidierender Atmosphäre in einem stationären Ofen bei einer Temperatur von 600°C bis 750°C mit einer Verweilzeit von mehr als 5 Stunden ausgeführt wird.

16. Verfahren nach einem der Ansprüche 10 bis 13 und 14 oder 15, wobei nach dem Tempem in oxidierender Atmosphäre der erhaltene Feststoff in Wasser unter Zusatz einer oder mehrerer alkalischer Lithiumverbindungen suspendiert und die Suspension bei einer Temperatur von 100°C bis 400°C sprühgetrocknet wird.

17. Verfahren nach Anspruch 16, wobei die alkalische Lithiumverbindung $Li_2CO_3$, $Li_2O_2$, $LiNO_3$, LiOH oder ein Gemisch aus zwei oder mehreren dieser Verbindungen ist.

18. Verfahren nach einem der Ansprüche 9 bis 17, wobei das innige Vermischen und/oder das Suspendieren unter Zusatz eines Bindemittels in Gegenwart eines Sinterhilfsmittels mit einer Konzentration von 0,1 bis 3 %, bezogen auf das Gewicht der eingesetzten Feststoffe, ausgeführt wird.

19. Verfahren gemäß Anspruch 18, wobei das Sinterhilfsmittel ein Boroxid ist.

20. Verfahren gemäß Anspruch 19, wobei das Sinterhilfsmittel $H_3BO_3$ ist.

21. Dünnfilmelektrode für sekundäre Lithiumionenbatterien, enthaltend eine Lithiumoxid enthaltende Lithiuminterkalationsverbindung gemäß Anspruch 1 als aktives Material.

22. Dünnfilmelektrode für sekundäre Lithiumionenbatterien, enthaltend Lithiummanganoxid gemäß Anspruch 7 als aktives Material.

23. Dünnfilmelektrode für sekundäre Lithiumionenbatterien, enthaltend Lithiummanganoxid gemäß Anspruch 8 als aktives Material.

24. Sekundäre Lithiumionenbatterie, enthaltend eine Lithiumoxid enthaltende Lithiuminterkalationsverbindung gemäß Anspruch 1 als aktives Material der positiven Elektrode.

25. Sekundäre Lithiumionenbatterie, enthaltend Lithiummanganoxid gemäß Anspruch 7 als aktives Material der positiven Elektrode.

26. Sekundäre Lithiumionenbatterie, enthaltend Lithiummanganoxid gemäß Anspruch 8 als aktives Material der positiven Elektrode.

**Claims**

1. A lithium oxide-containing lithium intercalation compound for thin-film electrodes in the form of agglomerates, where the agglomerates have

   - a specific surface area, determined by the BET method, of from 0.1 to 3 m/g,
   - an agglomerate size, determined from the $d_{50}$ value, of greater than 6 µm,
   - a diameter, determined from the $d_{90}$ value, of 100 µm or smaller and intrapores having a size of 0.3 µm $\leq d_{intra} \leq d_{50}/4$ µm, and an intrapore volume of at least 0.08 ml/g.

2. A lithium oxide-containing lithium intercalation compound as claimed in claim 1, where the specific BET surface area is from 0.3 to 1.5 m/g.

3. A lithium oxide-containing lithium intercalation compound as claimed in claim 1, where the specific BET surface area is from 0.5 to 1.2 m/g.

4. A lithium oxide-containing lithium intercalation compound as claimed in claims 1 to 3, where the agglomerate size, determined from the $d_{50}$ value, is greater than 10 μm.

5. A lithium oxide-containing lithium intercalation compound as claimed in claims 1 to 4, where the diameter, determined from the $d_{90}$ value, is smaller than 50 μm.

6. A lithium oxide-containing lithium intercalation compound as claimed in claims 1 to 4, where the diameter, determined from the $d_{90}$ value, is smaller than 40 μm.

7. A lithium oxide-containing lithium intercalation compound as claimed in claim 1, where lithium manganese oxide is present.

8. A lithium oxide-containing lithium intercalation compound as claimed in claims 2 to 6, where lithium manganese oxide is present.

9. A process for the preparation of a lithium oxide-containing lithium intercalation compound for thin-film electrodes in the form of agglomerates as claimed in claim 1, by

   a) preparation of an intimate mixture of one or more lithium compounds and one or more transition-metal compounds, followed by heating and grinding, giving a finely divided mixture;
   b) suspension of the finely divided mixture in water with the addition of an at least partially water-soluble polymeric binder, followed by spray-drying, giving agglomerates; and
   c) heating of the dry agglomerates in an oxidizing atmosphere at from 450°C to 900°C.

10. A process for the preparation of lithium manganese oxide-containing lithium intercalation compounds for thin-film electrodes in the form of agglomerates as claimed in claim 1, by

    a)

    a1) preparation of an intimate mixture of one or more lithium compounds and one or more manganese compounds, where at least one of these compounds or the sum of all compounds contains sufficient active oxygen that the number of equivalents of active oxygen is equal to or greater than the number of lithium atoms,

    a2) heating of the mixture under nitrogen, argon, air, oxygen or an oxygen-containing gas at from 600 to 1000°C and a residence time of from 15 to 120 minutes in a rotary tube furnace,

    a3) grinding of the heated mixture to give a finely divided mixture;

    b) suspension of the finely divided mixture in water with addition of an at least partially water-soluble binder, followed by spray-drying, giving agglomerates;

    c) heating of the dry agglomerates in an oxidizing atmosphere at from 450°C to 900°C and a residence time of from 0.5 to 10 hours.

11. A process as claimed in claim 10, where the heating in a2) and the grinding in a3) are carried out twice or more.

12. A process as claimed in claim 10 or 11, where the suspending in water is carried out with addition of polyvinyl alcohol as binder.

13. A process as claimed in claim 12, where polyvinyl alcohol is added in an amount of from 1 to 2% by weight, based on the total weight of the solids employed.

14. A process as claimed in any of claims 10 to 13, where the heating in an oxidizing atmosphere is carried out in a rotary tube furnace at a temperature of from 725°C to 900°C and a residence time of from 0.5 to 6 hours.

**EP 1 204 601 B1**

15. A process as claimed in any of claims 10 to 13, where the heating in an oxidizing atmosphere is carried out in a stationary furnace at a temperature of from 600°C to 750°C and a residence time of greater than 5 hours.

16. A process as claimed in any of claims 10 to 13 and 14 or 15, where, after the heating in an oxidizing atmosphere, the resultant solid is suspended in water with addition of one or more alkaline lithium compounds, and the suspension is spraydried at a temperature of from 100°C to 400°C.

17. A process as claimed in claim 16, where the alkaline lithium compound is $Li_2CO_3$, $Li_2O_2$, $LiNO_3$, LiOH or a mixture of two or more of these compounds.

18. A process as claimed in any of claims 9 to 17, where the intimate mixing and/or the suspension is carried out with addition of a binder in the presence of a sintering aid with a concentration of from 0.1 to 3%, based on the weight of the solids employed.

19. A process as claimed in claim 18, where the sintering aid is a boron oxide.

20. A process as claimed in claim 19, where the sintering aid is $H_3BO_3$.

21. A thin-film electrode for secondary lithium ion batteries, containing a lithium oxide-containing lithium intercalation compound as claimed in claim 1 as active material.

22. A thin-film electrode for secondary lithium ion batteries, containing lithium manganese oxide as claimed in claim 7 as active material.

23. A thin-film electrode for secondary lithium ion batteries, containing lithium manganese oxide as claimed in claim 8 as active material.

24. A secondary lithium ion battery containing a lithium oxide-containing lithium intercalation compound as claimed in claim 1 as active material of the positive electrode.

25. A secondary lithium ion battery containing lithium manganese oxide as claimed in claim 7 as active material of the positive electrode.

26. A secondary lithium ion battery containing lithium manganese oxide as claimed in claim 8 as active material of the positive electrode.

**Revendications**

1. Composés d'intercalation de lithium contenant de l'oxyde de lithium pour des électrodes à film mince sous forme d'agglomérats, les agglomérats

   - présentant une surface spécifique déterminée selon la méthode BET de 0,1 à 3 $m^2$/g,
   - une taille d'agglomérats déterminée par la valeur $d_{50}$ supérieure à 6 μm,
   - un diamètre déterminé par la valeur $d_{90}$ de 100 μm ou moins et des intrapores d'une taille de 0,3 μm $\leq d_{INTRA} \leq d_{50}/4$ μm ainsi qu'un volume intrapore d'au moins 0,08 ml/g.

2. Composés d'intercalation de lithium contenant de l'oxyde de lithium selon la revendication 1, la surface spécifique BET étant de 0,3 à 1,5 $m^2$/g.

3. Composés d'intercalation de lithium contenant de l'oxyde de lithium selon la revendication 1, la surface spécifique BET étant de 0,5 à 1,2 $m^2$/g.

4. Composés d'intercalation de lithium contenant de l'oxyde de lithium selon les revendications 1 à 3, la taille des agglomérats déterminée à l'aide de la valeur $d_{50}$ étant supérieure à 10 μm.

5. Composés d'intercalation de lithium contenant de l'oxyde de lithium selon les revendications 1 à 4, le diamètre déterminé à l'aide de la valeur $d_{90}$ étant inférieur à 50 μm.

**6.** Composés d'intercalation de lithium contenant de l'oxyde de lithium selon les revendications 1 à 4, le diamètre déterminé à l'aide de la valeur $d_{90}$ étant inférieur à 40 µm.

**7.** Composé d'intercalation de lithium contenant de l'oxyde de lithium selon la revendication 1, de l'oxyde de lithium et de manganèse étant contenu.

**8.** Composé d'intercalation de lithium contenant de l'oxyde de lithium selon les revendications 2 à 6, de l'oxyde de lithium et de manganèse étant contenu.

**9.** Procédé pour la préparation de composés d'intercalation de lithium contenant de l'oxyde de lithium pour des électrodes à film mince sous forme d'agglomérats selon la revendication 1, par

a) préparation d'un mélange intime d'un ou de plusieurs composés de lithium et d'un ou de plusieurs composés de métaux de transition et traitement thermique et broyage consécutifs, un mélange finement divisé étant obtenu ;
b) mise en suspension du mélange finement divisé dans l'eau avec addition d'un liant polymère au moins partiellement soluble dans l'eau et séchage par pulvérisation consécutif, des agglomérats étant obtenus ; et
c) traitement thermique des agglomérats secs dans une atmosphère oxydante à 450°C jusqu'à 900°C.

**10.** Procédé pour la préparation de composés d'intercalation de lithium contenant de l'oxyde de lithium et de manganèse pour des électrodes à film mince sous forme d'agglomérats selon la revendication 1, par

a)

a1) préparation d'un mélange intime d'un ou de plusieurs composés de lithium et d'un ou de plusieurs composés de manganèse, au moins un de ces composés ou la somme de tous les composés contenant une quantité d'oxygène actif telle que le nombre d'équivalents d'oxygène actif est identique ou supérieur au nombre d'atomes de lithium,
a2) traitement thermique du mélange sous azote, argon, air, oxygène ou un gaz contenant de l'oxygène à 600 jusqu'à 1000°C et pendant un temps de séjour de 15 à 120 minutes dans un four rotatif,
a3) broyage du mélange traité thermiquement en un mélange finement divisé ;

b) mise en suspension du mélange finement divisé dans l'eau avec addition d'un liant au moins partiellement soluble dans l'eau et séchage par pulvérisation consécutif, des agglomérats étant obtenus ;
c) traitement thermique des agglomérats secs dans une atmosphère oxydante à 450°C jusqu'à 900°C avec un temps de séjour de 0,5 à 10 heures.

**11.** Procédé selon la revendication 10, le traitement thermique selon a2) ainsi que le broyage selon a3) étant exécutés deux ou plusieurs fois.

**12.** Procédé selon les revendications 10 ou 11, la mise en suspension dans l'eau étant réalisée avec addition de poly (alcool vinylique) comme liant.

**13.** Procédé selon la revendication 12, le poly(alcool vinylique) étant ajouté en une quantité de 1 à 2% en poids par rapport au poids total des substances solides utilisées.

**14.** Procédé selon l'une quelconque des revendications 10 à 13, le traitement thermique dans une atmosphère oxydante étant réalisé dans un four rotatif à une température de 725°C jusqu'à 900°C avec un temps de séjour de 0,5 à 6 heures.

**15.** Procédé selon l'une quelconque des revendications 10 à 13, le traitement thermique dans une atmosphère oxydante étant réalisé dans un four stationnaire à une température de 600°C jusqu'à 750°C avec un temps de séjour de plus de 5 heures.

**16.** Procédé selon l'une quelconque des revendications 10 à 13 et 14 ou 15, la matière solide obtenue après le traitement thermique dans une atmosphère oxydante étant mise en suspension avec addition d'un ou de plusieurs composés alcalins du lithium et la suspension étant séchée par pulvérisation à une température de 100°C à 400°C.

**17.** Procédé selon la revendication 16, le composé alcalin du lithium étant $Li_2CO_3$, $Li_2O_2$, $LiNO_3$, LiOH ou un mélange d'un ou de plusieurs de ces composés.

**18.** Procédé selon l'une quelconque des revendications 9 à 17, le mélange intime et/ou la mise en suspension étant réalisé avec addition d'un liant en présence d'un adjuvant de frittage en une concentration de 0,1 à 3% par rapport au poids des matières solides utilisées.

**19.** Procédé selon la revendication 18, l'adjuvant de frittage étant un oxyde de bore.

**20.** Procédé selon la revendication 19, l'adjuvant de frittage étant $H_3BO_3$.

**21.** Electrode à film mince pour batteries secondaires aux ions de lithium, contenant un composé d'intercalation de lithium contenant de l'oxyde de lithium selon la revendication 1 comme matériau actif.

**22.** Electrode à film mince pour batteries secondaires aux ions de lithium, contenant de l'oxyde de lithium et de manganèse selon la revendication 7 comme matériau actif.

**23.** Electrode à film mince pour batteries secondaires aux ions de lithium, contenant de l'oxyde de lithium et de manganèse selon la revendication 8 comme matériau actif.

**24.** Batterie secondaire aux ions de lithium, contenant un composé d'intercalation de lithium contenant de l'oxyde de lithium selon la revendication 1 comme matériau actif de l'électrode positive.

**25.** Batterie secondaire aux ions de lithium, contenant de l'oxyde de lithium et de manganèse selon la revendication 7 comme matériau actif de l'électrode positive.

**26.** Batterie secondaire aux ions de lithium, contenant de l'oxyde de lithium et de manganèse selon la revendication 8 comme matériau actif de l'électrode positive.

Fig. 1

Fig. 2

|----------- 10 µm -----------|